# EUROPÄISCHE PATENTANMELDUNG

(11) **EP 0 666 427 A2**
(43) Veröffentlichungstag der Anmeldung: **09.08.1995**
(21) Anmeldenummer: 94120477.8
(22) Anmeldetag: 23.12.1994
(51) Int. Cl.: F16B 13/14, E21D 20/02

(54) **Ankerbolzen zur Verankerung mittels einer Verbundmasse und Verfahren zu dessen Herstellung**

(30) Priorität: 02.02.1994 DE 4403131
(71) Anmelder: fischerwerke Artur Fischer GmbH & Co. KG, D-72178 Waldachtal (DE)
(72) Erfinder: Haage, Manfred, Dipl.-Ing. (FH), D-72280 Dornstetten (DE); Seibold, Günter, Dipl.-Ing., D-72285 Pfalzgrafenweiler (DE); Plocher, Bernd, Dipl.-Ing. (FH), D-72108 Rottenburg (DE); Hein, Bernd, Dipl.-Ing. (FH), D-72250 Freudenstadt (DE); Weber, Wilfried, Dipl.-Ing. (FH), D-72296 Schopfloch (DE)

(57) **Zusammenfassung**

Es wird ein Ankerbolzen mit über einen Teil seiner Mantelfläche angeordneten Sperrelementen vorgeschlagen, wobei die Sperrelemente als radial abstehende Nocken (5) ausgebildet sind, die auf der Mantelfläche des Ankerbolzens (1) umlaufend und in Achsrichtung jeweils in Abständen zueinander angeordnet sind. Damit wird eine gute Vermischung der Verbundmasse und eine Reduzierung des Eintreibwiderstandes erreicht, der es ermöglicht, den über die Nocken gemessenen Außendurchmesser des Ankerbolzens annähernd dem Bohrlochdurchmesser anzugleichen. Eine einfache und kostengünstige Herstellung des Ankerbolzens (1) ist im Metallpulver-Spritzgußverfahren unter Verwendung eines Bindersystems und nachträglichem Entbindern und Sintern möglich.

## Beschreibung

Die Erfindung betrifft einen Ankerbolzen zur Verankerung in einem Bohrloch eines Bauteils mittels einer Verbundmasse gemäß dem Oberbegriff des Anspruches 1, sowie ein Verfahren zur Herstellung des Ankerbolzens.

Ankerbolzen zur Verankerung mittels einer Verbundmasse in einem Bohrloch eines Bauteils sind üblicherweise als Gewindestange ausgebildet, die an ihrem vorderen Ende eine Keilspitze und am hinteren Ende einen Mitnehmer aufweist. Mit einem Bohrhammer wird die Gewindestange in ein Bohrloch eingetrieben, in dem die Verbundmasse mittels einer Kartusche oder einer Glasampulle eingebracht ist. Mit der Keilspitze wird die Glasampulle zerstört und gleichzeitig die aus zwei Komponenten bestehende Verbundmasse im Bohrloch vermengt. Über die Gewindegänge des Ankerbolzens ergibt sich zwar eine gute Verbindung zwischen der Verbundmasse und dem Ankerbolzen, allerdings wird durch die Gewindespitzen das Aufsteigen der Verbundmasse entlang der Mantelfläche des Ankerbolzens erschwert. Um den dadurch bedingten hohen Eintreibwiderstand zu reduzieren, muß der Spalt zwischen dem Außendurchmesser des Ankerbolzens und der Bohrlochwandung entsprechend groß gewählt werden. Dadurch ist ein höherer Bohraufwand und eine größere Menge an Verbundmasse erforderlich. Desweiteren ist zur Erzielung einer ausreichenden Vermischung der Komponenten im Bohrloch ein längeres Drehen des Ankerbolzens und damit ein höherer Montageaufwand erforderlich.

Der Erfindung liegt die Aufgabe zugrunde, einen Ankerbolzen für die Verbundmörtel-Montage zu schaffen, der mit geringerem Zeitaufwand bei hohen Haltewerten und kurzen Aushärtzeiten aufgrund einer guten Vermischung der Verbundmasse verankerbar ist und der in einfacher Weise hergestellt werden kann.

Die Lösung dieser Aufgabe wird durch die im Anspruch 1 und 9 angegebenen Merkmale erreicht. Durch die auf der Mantelfläche des Ankerbolzens umlaufende und in Achsrichtung jeweils in Abständen zueinander angeordneten radial abstehenden Nocken ergeben sich zusammenhängende Zwischenräume zwischen der Mantelfläche des Ankerbolzens und der Bohrlochwandung, in denen die Verbundmasse beim Eintreiben des Ankerbolzens aufsteigen kann. An den vorderen Stirnflächen der Nocken staut sich die Verbundmasse beim Aufsteigen, so daß durch das Umfließen der Nocken eine gute Vermengung der Komponenten der Verbundmasse eintritt. Der über den Nocken gemessene Durchmesser des Ankerbolzens kann annähernd dem Bohrlochdurchmesser entsprechen. Das Eintreiben des Ankerbolzens kann sowohl mit als auch ohne Drehung erfolgen.

Eine noch bessere Vermengung der Verbundmasse kann dadurch erfolgen, daß die Nocken in Achsrichtung in der Weise versetzt zueinander angeordnet sind, daß der nachgeordnete Nocken jeweils mit der von den beiden vorderen Nocken gebildeten Lücke fluchtet.

Zur Reduzierung des Eintreibwiderstandes ist es ferner zweckmäßig, die vordere Stirnfläche der Nocken als Keilspitze auszubilden.

Um bei einer Bohrlocherweiterung durch Rißbildung und Nachrutschen des Ankerbolzens einen Spreizeffekt zu erzielen, können die Nocken einen zum hinteren Ende und in Achsrichtung geneigte Schräge aufweisen. Dieser Nachspreizeffekt kann noch dadurch gefördert werden, daß der gesamte Ankerbolzen mit einer die Haftung der Verbundmasse am Ankerbolzen vermindernde Beschichtung versehen ist. Bei der Bohrlocherweiterung löst sich damit die Verbundmasse vom Ankerbolzen geringfügig ab, so daß durch Nachrutschen des Ankerbolzens die an den Nocken angeordnete Schräge wieder an den in der Verbundmasse ausgeformten Schrägflächen zur Anlage kommt.

Zum Säubern der Bohrlochwandung von Bohrmehl können auf den Nocken Schabkanten ausgebildet sein.

Bei vorwiegend im Drehgang in das Bohrloch einzutreibenden Ankerbolzen ist es zweckmäßig, daß die Nocken wendelförmig auf der Mantelfläche des Ankerbolzens angeordnet und dem Steigungswinkel entsprechend ausgerichtet sind. Für das maschinelle Setzen des Ankerbolzens kann dieser an seinem hinteren Ende einen vorzugsweise als Mehrkant ausgebildeten Mitnehmer aufweisen.

Eine einfache und kostengünstige Herstellung des Ankerbolzens ist mit dem ansich bekannten Metall-Spritzgußverfahren möglich. Nach diesem Verfahren wird der Ankerbolzen aus Metallpulver im Spritzgußverfahren unter Verwendung eines Bindersystems und nachträglichem Entbindern und Sintern hergestellt.

Die Erfindung wird nachfolgend anhand der in der Zeichnung dargestellten Ausführungsbeispiele näher erläutert.

**Es zeigen**:
- **Figur 1**: den Ankerbolzen und
- **Figur 2**: den im Bohrloch eingesetzten Ankerbolzen in vergrößerter Darstellung,
- **Figur 3**: den Ankerbolzen mit wendelförmig angeordneten Nocken,

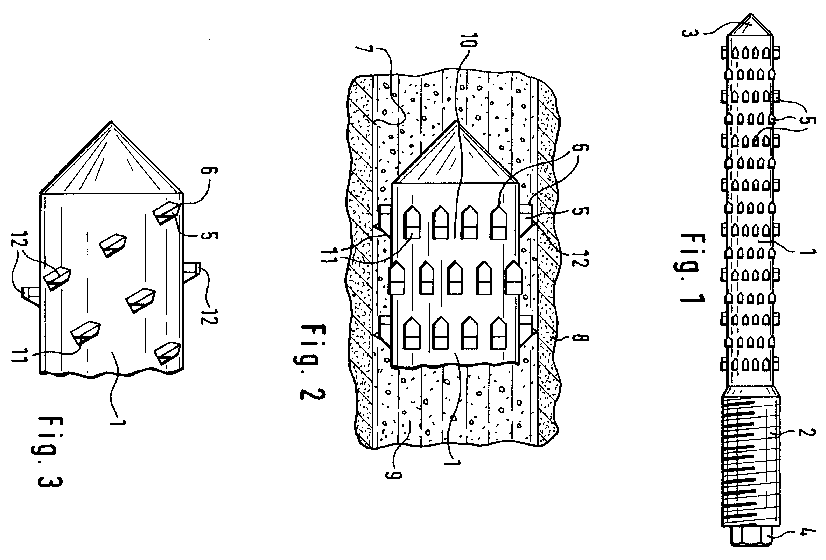

Der in Figur 1 dargestellte Ankerbolzen 1 weist zur Befestigung eines Gegenstandes an seinem hinteren Ende ein Gewinde 2 und zur leichteren Zerstörung einer Glaspatrone und besseren Verdrängung der Verbundmasse an seinem vorderen Ende eine Spitze 3 auf. Zum maschinellen Eintreiben des Ankerbolzens 1 mit einem Bohrhammer ohne oder mit eingeschaltetem Drehgang ist am hinteren Ende des Ankerbolzens 1 ein als Außenmehrkant ausgebildeter Mitnehmer 4 angeordnet. Die Mantelfläche des Ankerbolzens 1 ist mit radial abstehenden Nocken 5 versehen, die umlaufend und in Achsrichtung jeweils in Abständen zueinander angeordnet sind.

Aus der vergrößerten Darstellung gemäß Figur 2 ist erkennbar, daß die vordere Stirnfläche der Nocken 5 eine Keilspitze 6 bildet. Durch diese Keilspitze wird der Eintreibwiderstand beim Eintreiben des Ankerbolzens in das Bohrloch 7 des Bauteiles 8 vermindert. Zur Verbesserung der Vermengung der Verbundmasse 9 ist es zweckmäßig, die Nocken 5 in Achsrichtung in der Weise versetzt zueinander anzuordnen, daß der nachgeordnete Nocken 5'. jeweils mit der von den beiden vorderen Nocken gebildeten Lücke 10 fluchtet. Um eine radiale Kraftkomponente in Richtung Bohrlochwandung bei Belastung des Ankerbolzens zu erzielen, weisen die Nocken 5 eine zum hinteren Ende und in Achsrichtung geneigte Schräge 11 auf.

Bei dem in Figur 3 dargestellten Ausführungsbeispiel des Ankerbolzens sind die Nocken 5 wendelförmig auf der Mantelfläche des Ankerbolzens angeordnet und mit ihrer Spitze 6 und den Längskanten dem Steigungswinkel entsprechend ausgerichtet. Lediglich die am Nocken 5 angeordnete Schräge 11 ist in Achsrichtung abfallend angeordnet.

Die beiden Figuren 2 und 3 zeigen den Nocken 5 mit einer auf dem Nocken angeordneten Schabkante 12. Der Verlauf der Schabkante 12 in Längsrichtung des Nockens 5 empfiehlt sich dann, wenn die Nocken wendelförmig angeordnet und im Drehgang in das Bohrloch eingetrieben werden. Bei dem vorwiegend ohne Drehgang einzutreibenden Ankerbolzen gemäß Figur 2 ist die Schabkante 12 quer zur Längsrichtung des Nockens 5 angeordnet.

## Patentansprüche

1. Ankerbolzen mit über einen Teil seiner Mantelfläche angeordneten Sperrelementen zur Verankerung in einem Bohrloch eines Bauteils mittels einer Verbundmasse, und einem Gewinde an seinem hinteren Ende zur Befestigung eines Gegenstandes, **dadurch gekennzeichnet,** daß die Sperrelemente als radial abstehende Nocken (5) ausgebildet sind, die auf der Mantelfläche des Ankerbolzens (1) umlaufend und in Achsrichtung jeweils in Abständen zueinander angeordnet sind.

2. Ankerbolzen nach Anspruch 1, **dadurch gekennzeichnet,** daß die Nocken (5) in Achsrichtung in der Weise versetzt zueinander angeordnet sind, daß der nachgeordnete Nocken (5') jeweils mit der von den beiden vorderen Nocken (5) gebildeten Lücke (10) fluchtet.

3. Ankerbolzen nach Anspruch 1, **dadurch gekennzeichnet,** daß die vordere Stirnfläche der Nocken (5) eine Keilspitze (6) bildet.

4. Ankerbolzen nach Anspruch 1, **dadurch gekennzeichnet,** daß die Nocken (5) eine zum hinteren Ende und in Achsrichtung geneigte Schräge (11) aufweisen.

5. Ankerbolzen nach Anspruch 1, **dadurch gekennzeichnet,** daß auf den Nocken (5) Schabkanten (12) ausgebildet sind.

6. Ankerbolzen nach einem der vorhergehenden Ansprüche, **dadurch gekennzeichnet,** daß die Nocken (5) wendelförmig auf der Mantelfläche des Ankerbolzens (1) angeordnet und dem Steigungswinkel entsprechend ausgerichtet sind.

7. Ankerbolzen nach einem der vorhergehenden Ansprüche, **dadurch gekennzeichnet,** daß der Ankerbolzen (1) an seinem vorderen Ende eine Spitze (3) und am hinteren Ende einen als Mehrkant ausgebildeten Mitnehmer (4) aufweist.

8. Ankerbolzen nach einem der vorhergehenden Ansprüche, **dadurch gekennzeichnet,** daß die Außenfläche des Ankerbolzens (1) mit einem Antihaftmittel beschichtet ist.

9. Verfahren zur Herstellung des Ankerbolzens gemäß einem der vorhergehenden Ansprüche, **dadurch gekennzeichnet,** daß der Ankerbolzen (1) aus Metallpulver im Spritzgußverfahren unter Verwendung eines Bindersystems und nachträglichem Entbindern und Sintern hergestellt wird .
